# EUROPEAN PATENT APPLICATION

(11) **EP 4 769 327 A1**
(43) Date of publication of application: **01.07.2026**
(21) Application number: 25215792.0
(22) Date of filing: 14.11.2025
(51) Int. Cl.: G06V 10/36, G06T 5/00, G06T 7/254, G06V 10/82, G06V 20/52

(54) **DYNAMIC EVENT DETECTION APPARATUS, DYNAMIC EVENT DETECTION METHOD, AND PROGRAM**

(30) Priority: 27.12.2024 JP 2024232264
(71) Applicant: Konica Minolta, Inc., Tokyo 100-7015 (JP)
(72) Inventor: TSUTSUKAWA, Kazuki, Tokyo, 100-7015 (JP)
(74) Representative: Gille Hrabal Partnerschaftsgesellschaft mbB Patentanwälte

(57) **Abstract**

One aspect of a dynamic event detection apparatus (100) of the present disclosure includes: an input reception section (101) that receives an input of a moving image (201) captured by an imaging apparatus (10); a time-series-change moving image generation section (103) that generates a time-series-change moving image (211) indicating a time-series change in a moving object (206) appearing in the moving image (201); a contrast enhancement section (107) that enhances, based on the time-series-change moving image (211), contrast of a motion region in which the moving object (206) appears on the moving image (201); and a dynamic event detection section (111) that detects, based on the moving image (231) after contrast enhancement, whether a dynamic event as a target occurring.

## Description

### Background

### Technical Field

The present invention relates to a dynamic event detection apparatus, a dynamic event detection method, and a program.

### Description of Related Art

In the related art, there is known a technology in which a dynamic event such as smoke generation or landslide is detected by analyzing a moving image captured by an imaging apparatus such as a camera.

For example, Yichao Cao, "STCNet: Spatio-Temporal Cross Network for Industrial Smoke Detection", arXiv 2020 discloses a technology in which smoke is detected by using a moving image recognition deep learning (DL) model to which an RGB moving image and an inter-frame difference moving image indicating a difference between frames of the RGB moving image are input.

In addition, for example, Japanese Patent Application Laid-Open No. 2005-166054 discloses a technology in which a motion moving image is generated by performing temporal and spatial filter processing on a moving image to extract only motion, and an object is tracked in the motion moving image. According to the technology disclosed in Japanese Patent Application Laid-Open No. 2005-166054, components that cause false detection of motion can be removed as noise, and thus, for example, the motion of dirt and stones, which is the initial motion of a landslide, and the motion of dirt and stones, which causes false detection, can be distinctively detected.

### Summary

However, in the technology disclosed in "STCNet: Spatio-Temporal Cross Network for Industrial Smoke Detection" described above, the RGB moving image and the inter-frame difference moving image cannot supplement information mutually in a case where the contrast of the moving image is low. Accordingly, in the technology disclosed in "STCNet: Spatio-Temporal Cross Network for Industrial Smoke Detection" described above, a dynamic event may not be detected.

In addition, in the technology disclosed in Japanese Patent Application Laid-Open No. 2005-166054 described above, only motion is extracted by temporal and spatial filter processing to generate a motion moving image. For this reason, in the technology disclosed in Japanese Patent Application Laid-Open No. 2005-166054, small motion of a moving object, which has to be detected as a dynamic event in the first place, and the background in a moving image that contributes to detection of a dynamic event are also removed as noise, which may result in non-detection of a dynamic event.

An object of the present invention is to provide a dynamic event detection apparatus, a dynamic event detection method, and a program each capable of perform an improvement in non-detection of a dynamic event.

In order to realize at least one of the above-mentioned objects, a dynamic event detection apparatus reflecting one aspect of the present invention includes: an input reception section that receives an input of a moving image captured by an imaging apparatus; a time-series-change moving image generation section that generates a time-series-change moving image indicating a time-series change in a moving object appearing in the moving image; a contrast enhancement section that enhances, based on the time-series-change moving image, contrast of a motion region in which the moving object appears on the moving image; and a dynamic event detection section that detects, based on the moving image after contrast enhancement, whether a dynamic event as a target is occurring.

### Brief Description of Drawings

The advantages and features provided by one or more embodiments of the invention will become more fully understood from the detailed description given hereinbelow and the appended drawings which are given by way of illustration only, and thus are not intended as a definition of the limits of the present invention:
Fig. 1 is a block diagram illustrating an example of the configuration of a dynamic event detection system including a dynamic event detection apparatus in the present embodiment;
Fig. 2 is a block diagram illustrating an example of the functional configuration of the dynamic event detection apparatus in the present embodiment;
Fig. 3 is a diagram illustrating an example of a moving image received by an input reception section in the present embodiment;
Fig. 4 is a diagram illustrating an example of a time-series-change moving image generated by a time-series-change moving image generation section in the present embodiment;
Fig. 5 is a diagram illustrating an example of a contrast enhancement filter generated by a filter generation section in the present embodiment;
Fig. 6 is a diagram illustrating an example of a moving image in which the contrast of a motion region has been enhanced by a contrast enhancement section in the present embodiment;
Fig. 7 is a diagram illustrating an example of comparison between the moving image before the contrast enhancement and the moving image after the contrast enhancement in the present embodiment;
Fig. 8 is a flowchart illustrating an example of processing performed at the dynamic event detection apparatus in the present embodiment; and
Fig. 9 is a flowchart illustrating an example of dynamic event detection processing in the present embodiment.

### Detailed Description of Embodiments

Hereinafter, one or more embodiments of the present invention will be described with reference to the drawings. However, the scope of the invention is not limited to the disclosed embodiments.

Hereinafter, an embodiment of the present disclosure (hereinafter simply referred to as the "the present embodiment") will be described in detail with reference to the accompanying drawings. Note that, the present disclosure is not limited to the following embodiment. In addition, the following embodiment and variations may also be combined as appropriate.

Hereinafter, the present disclosure will be described using smoke as an example of a dynamic event. However, the dynamic event is not limited to smoke, but may be fog, steam, gas, landslide (falling rock), or the like.

First, the configuration of a dynamic event detection apparatus in the present embodiment will be described.

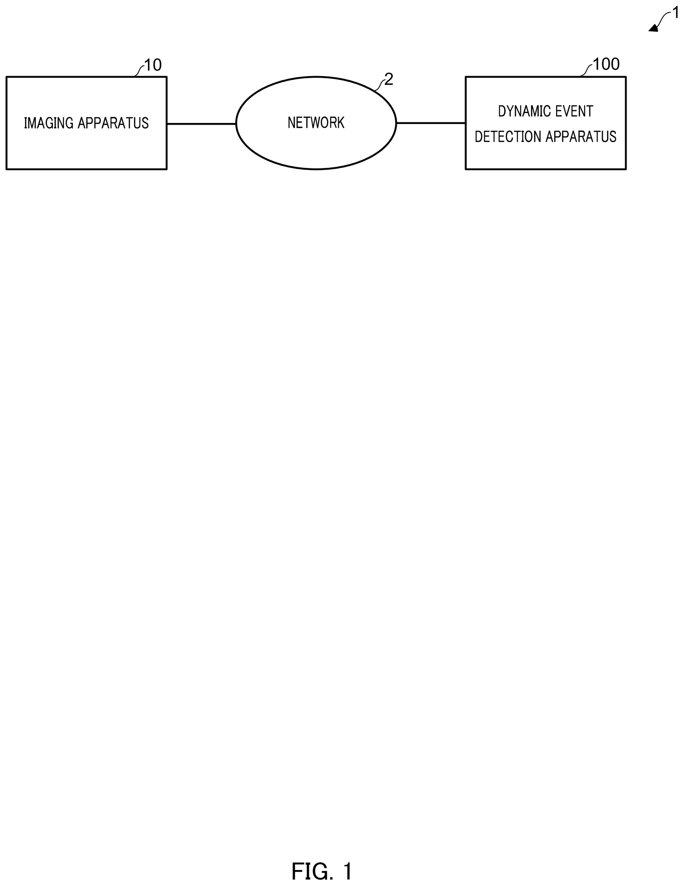

Fig. 1 is a block diagram illustrating an example of the configuration of a dynamic event detection system 1 including a dynamic event detection apparatus 100 in the present embodiment. As illustrated in Fig. 1, the dynamic event detection system 1 includes an imaging apparatus 10 and the dynamic event detection apparatus 100. The imaging apparatus 10 and the dynamic event detection apparatus 100 are connected to each other via a network 2. The network 2 can be realized by, for example, at least one of the Internet, a local area network (LAN), and the like. The network 2 may be a wired network or a wireless network, or a wired network and a wireless network may be present in a mixed manner in the network 2.

The imaging apparatus 10 captures a moving image of a detection target area in which an event desired to be detected as a dynamic event is likely to occur, and examples thereof include a camera. In the present embodiment, an RGB camera including an RGB sensor capable of recording visible light as RGB colors will be described as an example of the imaging apparatus 10, but the present disclosure is not limited thereto. In addition, the imaging apparatus 10 may be fixedly disposed indoors or outdoors as a monitoring camera, or may be a handy cam or the like that a person who performs imaging holds with his/her hand(s) to perform imaging.

The dynamic event detection apparatus 100 detects whether a dynamic event is occurring in the above-described detection target area by using a moving image (RGB moving image) captured by the imaging apparatus 10. In the present embodiment, as described above, the dynamic event is smoke, and the dynamic event detection apparatus 100 detects, for example, whether smoke is occurring. Thus, the dynamic event detection apparatus 100 may detect whether a fire is occurring, or the like.

The dynamic event detection apparatus 100 may be realized as software by, for example, an information processing apparatus such as a personal computer (PC), a tablet terminal, or a smartphone. The information processing apparatus may be a computer having a general hardware configuration including at least a central processing unit (CPU), a read only memory (ROM), a random access memory (RAM), a hard disk drive (HDD), and the like. In addition, for example, the dynamic event detection apparatus 100 may be realized as hardware by a hardwired circuit, such as an integrated circuit (IC), an application specific integrated circuit (ASIC), or a field-programmable gate array (FPGA).

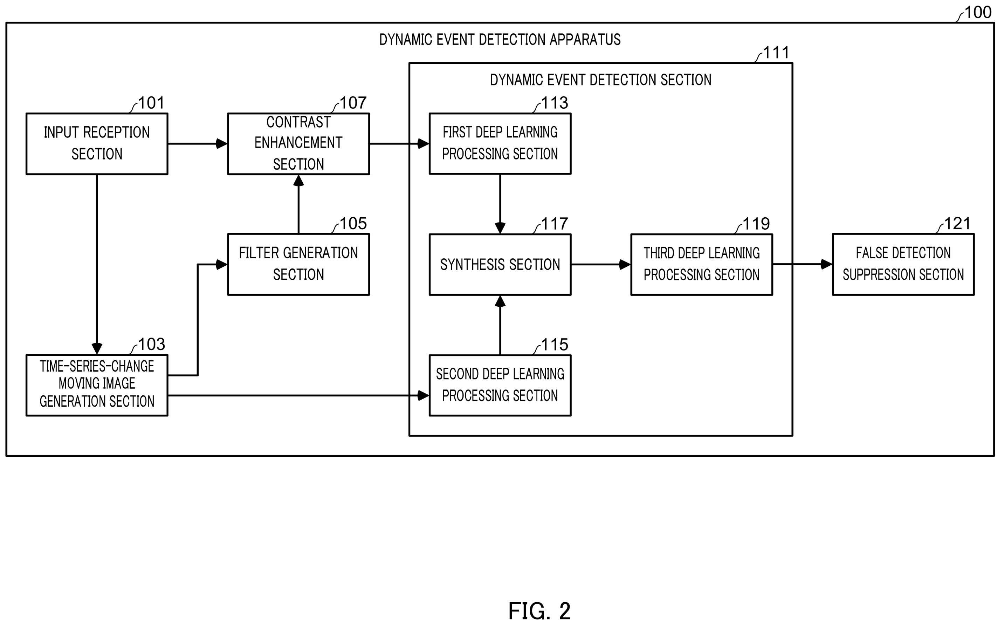

Fig. 2 is a block diagram illustrating an example of the functional configuration of the dynamic event detection apparatus 100 in the present embodiment. As illustrated in Fig. 2, the dynamic event detection apparatus 100 includes an input reception section 101, a time-series-change moving image generation section 103, a filter generation section 105, a contrast enhancement section 107, a dynamic event detection section 111, and a false detection suppression section 121. The dynamic event detection section 111 includes a first deep learning processing section 113, a second deep learning processing section 115, a synthesis section 117, and a third deep learning processing section 119.

In a case where each of the function sections described above is realized as software, the CPU described above reads a dynamic event detection program from the ROM or the HDD onto the RAM and executes the dynamic event detection program. Thus, it is configured such that each of the function sections described above is realized on the computer of the dynamic event detection apparatus 100. In addition, in a case where each of the function sections described above is realized as hardware, each of the function sections described above may be implemented by the above-described hardwired circuit described above. In addition, each of the function sections described above may also be realized by cooperation of software and hardware, or any one of the function sections may also be realized by cooperation of software and hardware. That is, each of the function sections described above can be realized by at least one hardware processor.

Note that, the dynamic event detection apparatus 100 in the present embodiment does not necessarily include all of the function sections described above as essential configurations and at least one or some of the function sections can be omitted. For example, the false detection suppression section 121 may also be omitted.

The input reception section 101 receives an input of a moving image captured by the imaging apparatus 10. In the present embodiment, the input reception section 101 receives an input of an RGB moving image obtained by the imaging apparatus 10 imaging the detection target area described above.

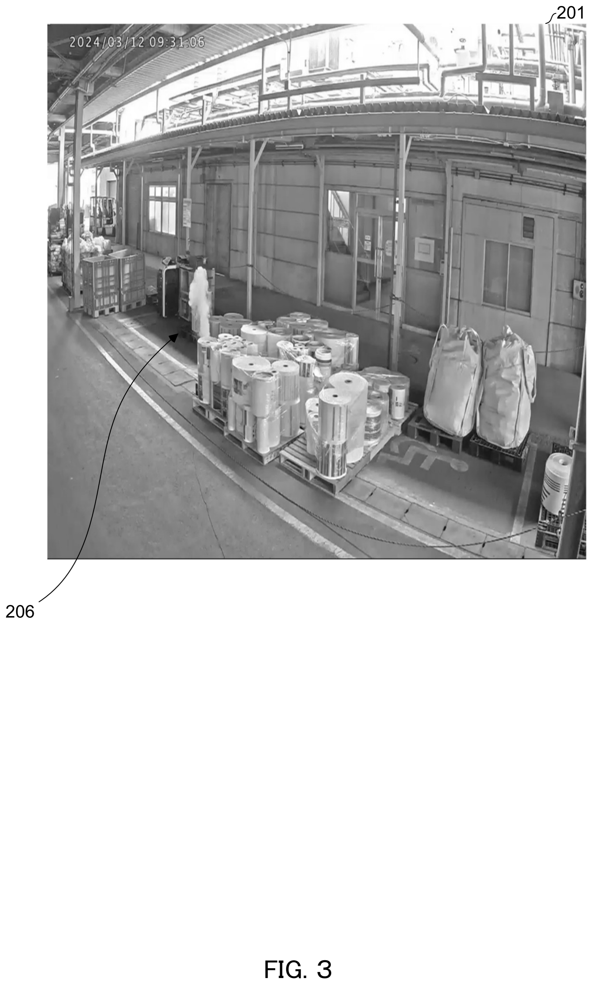

Fig. 3 is a diagram illustrating an example of a moving image 201 received by the input reception section 101 in the present embodiment. In the moving image 201 illustrated in Fig. 3, smoke 206 appears as a moving object. The moving object may be a dynamic object, and examples of the moving object also include a dynamic event such as smoke which is a detection target for the dynamic event detection apparatus 100.

The time-series-change moving image generation section 103 generates a time-series-change moving image indicating a time-series change in a moving object appearing in a moving image received by the input reception section 101. The time-series-change moving image generation section 103 generates a time-series-change moving image by, for example, a difference between adjacent frames of a moving image, a background difference with respect to a moving image, or an optical flow. However, the method of generating a time-series-change moving image is not limited thereto, and the time-series-change moving image generation section 103 may generate a time-series-change moving image by using any generation method.

In a case where a difference between adjacent frames of a moving image is used, the time-series-change moving image generation section 103 acquires a difference between the channel intensities of adjacent frames of a RGB moving image received by the input reception section 101. Thus, the time-series-change moving image generation section 103 generates an inter-frame difference moving image corresponding to a time-series-change moving image in the present embodiment.

For example, the time-series-change moving image generation section 103 sets the first frame of a time-series-change moving image as a gray image ((R, G, B) = (128, 128, 128)). In addition, the time-series-change moving image generation section 103 obtains an inter-frame difference moving image corresponding for 35 frames by obtaining a difference between the channel intensities of adjacent frames for 36 frames of a RGB moving image. The time-series-change moving image generation section 103 combines the time-series-change moving image and the inter-frame difference moving image in the time-series direction to obtain a time-series-change moving image (36 frames, the vertical size, the horizontal size, RGB channels).

In a case where a background difference with respect to a moving image, the time-series-change moving image generation section 103 applies a background difference to a RGB moving image received by the input reception section 101 to obtain a background mask and a foreground mask. By applying the background mask to the RGB moving image, the time-series-change moving image generation section 103 generates a moving image in which a moving object corresponding to a time-series-change moving image in the present embodiment has been extracted.

In a case where an optical flow is used, the time-series-change moving image generation section 103 calculates a movement vector of each pixel of a RGB moving image received by the input reception section 101, and colors the direction and the speed. Thus, the time-series-change moving image generation section 103 generates a moving image representing the motion of a moving object, which corresponds to a time-series-change moving image in the present embodiment.

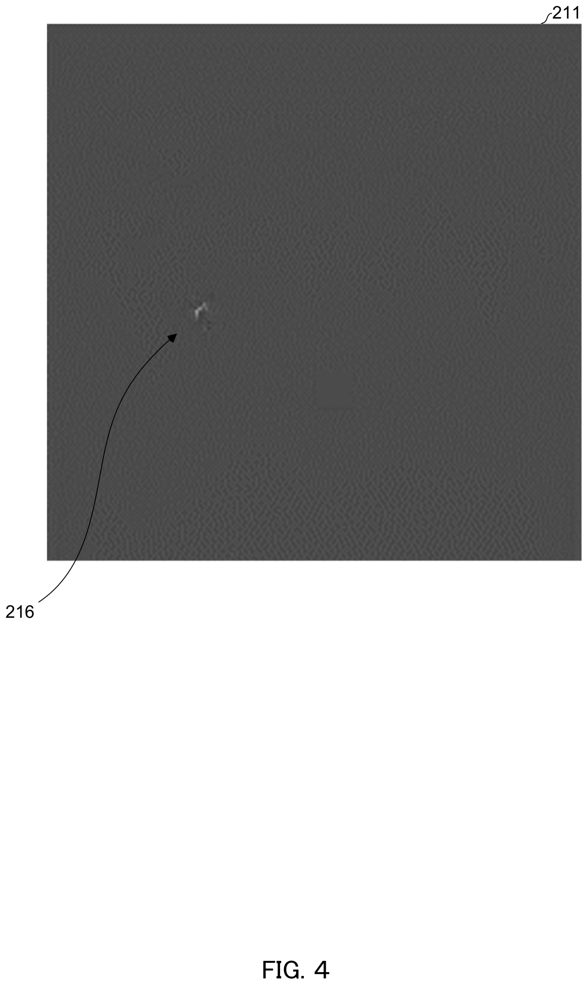

Fig. 4 is a diagram illustrating an example of a time-series-change moving image 211 generated by the time-series-change moving image generation section 103 in the present embodiment. The time-series-change moving image 211 illustrated in Fig. 4 is a time-series-change moving image of the moving image 201 illustrated in Fig. 3, and a time-series change in the smoke 206 illustrated in Fig. 3, which is a moving object, is illustrated as smoke 216.

The filter generation section 105 generates, based on a time-series-change moving image generated by the time-series-change moving image generation section 103, a contrast enhancement filter for enhancing the contrast of a motion region in which a moving object appears on a moving image received by the input reception section 101.

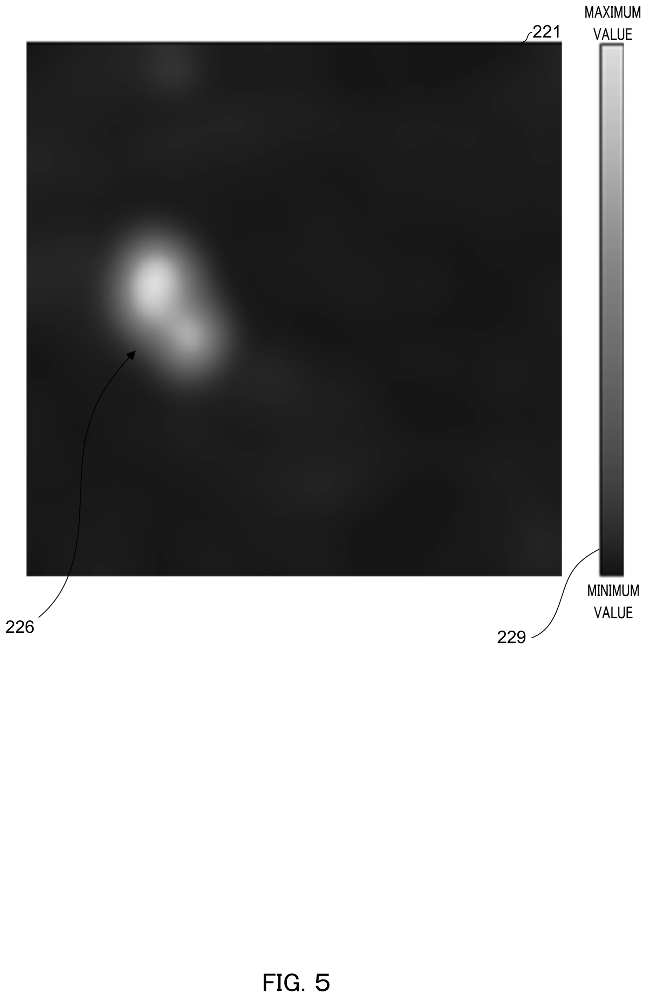

Fig. 5 is a diagram illustrating an example of a contrast enhancement filter 221 generated by the filter generation section 105 in the present embodiment. The contrast enhancement filter 221 illustrated in Fig. 5 is generated based on the time-series-change moving image 211 illustrated in Fig. 4, and is a filter whose intensity increases as the motion of a moving object increases. As illustrated by a filter bar 229, the contrast enhancement filter 221 illustrated in Fig. 5 is expressed so as to be brighter as the intensity is higher (the value of the intensity is larger) and so as to be darker as the intensity is lower (the value of the intensity is smaller). For this reason, in the contrast enhancement filter 221 illustrated in Fig. 5, the region of the smoke 226 that is a moving object is expressed to be bright, and the other region is expressed to be dark.

For example, in a case where the time-series-change moving image is an inter-frame difference moving image, the filter generation section 105 averages frame images for a predetermined number of frames of the time-series-change moving image and applies a smoothing filter in the spatial direction. Thus, the filter generation section 105 generates a contrast enhancement filter as illustrated in Fig. 5. Examples of averaging frame images for a predetermined number of frames include taking, for each pixel, an average value of the values of pixels for a specified number of frames. Examples of the smoothing filter include a Gaussian filter.

More specifically, a time-series-change moving image is greatly affected by noise and local change, and includes only a motion region, and the background is removed therefrom. For this reason, the filter generation section 105 obtains a motion region in units of moving images input to a moving image recognition deep learning model (the vertical size, the horizontal size, RGB channels) by converting the positive/negative values of the frame images of a time-series-change moving image into absolute values and averaging the absolute values in the time-series direction. The filter generation section 105 applies the smoothing filter in the spatial direction (a Gaussian filter or the like) (the vertical size, the horizontal size, and RGB channels) for further blurring. Thus, the contrast enhancement filter is obtained.

Note that, the filter generation section 105 may also be configured to generate a contrast enhancement filter for each channel of a RGB moving image. In addition, the filter generation section 105 may also be configured to obtain one contrast enhancement filter (of one channel) by integrating the generated contrast enhancement filters (channel intensities) of the respective channels. Specifically, the filter generation section 105 may average the generated contrast enhancement filters of the respective channels in the channel direction (the vertical size, the horizontal size). Forming a single-channel contrast enhancement filter attains effects of making processing efficient and improving robustness against noise. Note that, in a case where it is desired that color information is held, it is not necessary to form a single-channel contrast enhancement filter.

In addition, the filter generation section 105 may also be configured to normalize the pixel value of the generated contrast enhancement filter to a value between a predetermined minimum value and a predetermined maximum value. This is because the contrast enhancement filter requires the range of input values to be controlled for being input to the moving image recognition deep learning model. Examples of the predetermined minimum value include a specified minimum value (for example, 1.0), and examples of the predetermined maximum value includes a specified maximum value (for example, 1.5).

Based on a time-series-change moving image generated by the time-series-change moving image generation section 103, the contrast enhancement section 107 enhances the contrast of a motion region in which a moving object appears on a moving image received by the input reception section 101.

Specifically, the contrast enhancement section 107 applies the contrast enhancing filter generated by the filter generation section 105 to a moving image received by the input reception section 101 to enhance the contrast of a motion region on the moving image. Thus, the contrast between the moving object and the background included in the motion region can be increased as compared with the moving image before the application of the contrast enhancement filter.

More specifically, the contrast enhancement section 107 multiplies, for each pixel, the pixel value of each frame moving image of a RGB moving image received by the input reception section 101 by the pixel value of the contrast enhancement filter generated by the filter generation section 105. At this time, when the filter generation section 105 has not performed averaging in the time-series direction at the time of the generation of the contrast enhancement filter, the contrast enhancement section 107 applies a different contrast enhancement filter for each frame. In addition, when the filter generation section 105 has not formed a single-channel contrast enhancement filter, the contrast enhancement section 107 applies a contrast enhancement filter for each RGB channel. In addition, when the filter generation section 105 has formed a single-channel contrast enhancement filter, the contrast enhancement section 107 applies the contrast enhancement filter formed as the single-channel contrast enhancement filter to each of the RGB channels. The RGB moving image after the contrast enhancement has a value obtained by multiplying each pixel by the minimum value to the maximum value defined in the normalization processing of the contrast enhancement filter. Thereafter, if necessary, standardization (scaling of the mean and variance) is performed as is usually performed for an input to the moving image recognition deep learning model.

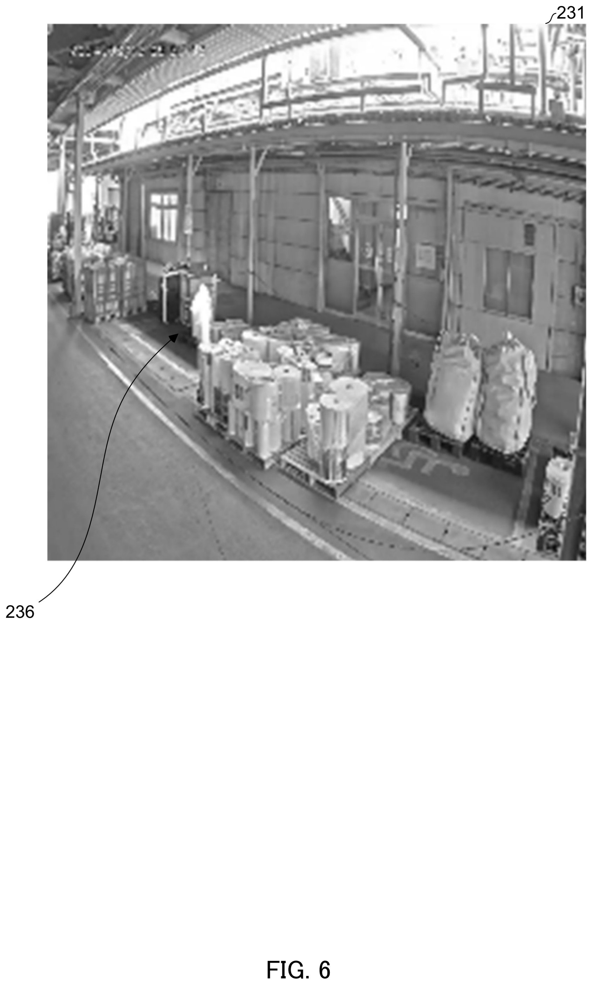

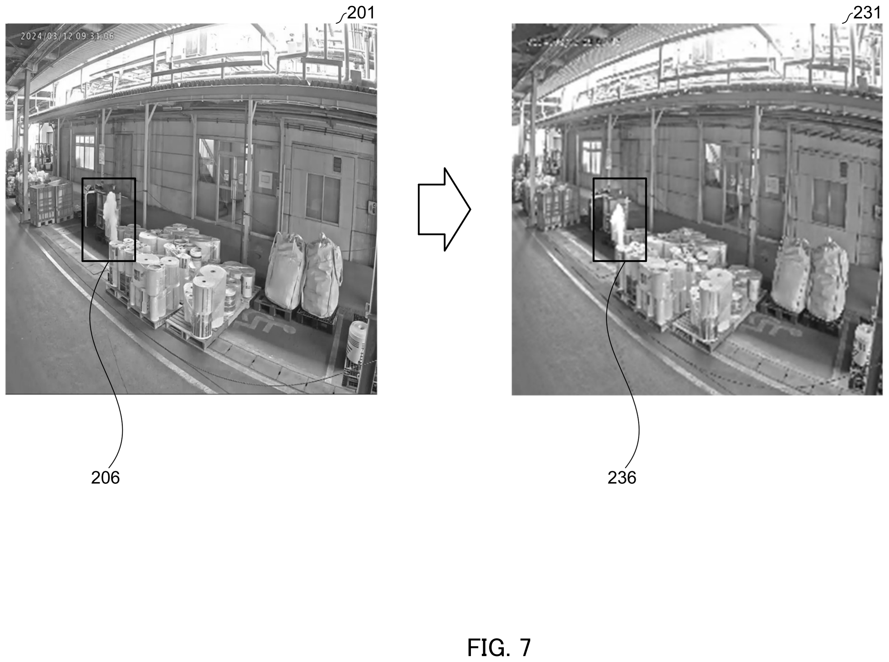

Fig. 6 is a diagram illustrating an example of a moving image 231 in which the contrast of a motion region has been enhanced by the contrast enhancement section 107 in the present embodiment. Fig. 7 is a diagram illustrating an example of comparison between the moving image 201 before the contrast enhancement and the moving image 231 after the contrast enhancement in the present embodiment. Note that, the moving image 201 before the contrast enhancement illustrated in Fig. 7 is the moving image 201 received by the input reception section 101 illustrated in Fig. 3.

As is clear from Figs. 6 and 7, it can be seen that in the moving image 231 after the contrast enhancement, the contrast of the smoke 236 that is a moving object is enhanced as compared with the smoke 206 in the moving image 201 before the contrast enhancement.

The dynamic event detection section 111 detects, based on a moving image after contrast enhancement which has been enhanced by the contrast enhancement section 107, whether a dynamic event as a target is occurring. For example, the dynamic event detection section 111 detects and outputs the occurrence probability of a dynamic event for each frame as to whether the dynamic event is occurring.

In addition, in the present embodiment, the dynamic event detection section 111 further detects, based on a time-series-change moving image generated by the time-series-change moving image generation section 103, whether a dynamic event is occurring. As described above, in the present embodiment, the so-called Two-Stream method in which a time-series-change moving image is also processed as an input in addition to a moving image after contrast enhancement will be described as an example, but the present invention is not limited thereto. For example, a so-called One-Stream method may also be used in which a moving image after contrast enhancement is processed as an input without processing a time-series-change moving image as an input.

In addition, in the present embodiment, a case where the dynamic event detection section 111 performs detection by deep learning (DL) processing will be described as an example. Specifically, the dynamic event detection section 111 performs detection by using, for example, a moving image recognition deep learning model obtained by performing machine learning on a neural network by deep learning. Hereinafter, the moving image recognition deep learning model may also be referred to as a DL model. In addition, performing detection by using the DL model may also be referred to as DL processing.

For example, the DL model is generated by performing, by deep learning, machine learning on a data set that is a collection of learning data in which a ground truth label in terms of whether a dynamic event is occurring in a moving image to be learned is assigned to the moving image. By inputting a moving image after contrast enhancement to such a DL model, the dynamic event detection section 111 obtains, from the DL model, a probability (likelihood) that a dynamic event is occurring in the moving image. Based on the likelihood, the dynamic event detection section 111 detects whether a dynamic event is occurring.

Note that, it may also be configured such that the dynamic event detection section 111 further detects, in a moving image, a frame image in which a dynamic event is occurring. In this case, it is configured such that the ground truth label for the learning data indicates, in addition to whether a dynamic event is occurring, the frame number or the like for identifying the frame image in which the dynamic event is occurring, for example. The DL model may be generated by performing machine learning on a data set that is a collection of such learning data.

In addition, it may also be configured such that the dynamic event detection section 111 detects, in a frame image, a region in which a dynamic event is occurring. In this case, it is configured such that the ground truth label for the learning data indicates, in addition to whether a dynamic event is occurring and the frame number, coordinate information or the like indicating, in the frame image, the region in which the dynamic event is occurring, for example. The DL model may be generated by performing machine learning on a data set that is a collection of such learning data.

In addition, it may also be configured such that the dynamic event detection section 111 uses deep learning processing to detect whether a dynamic event is occurring and to detect a region in which the dynamic event is occurring, and uses an object detection algorithm different from the deep learning processing to detect, in a frame image, a region in which the dynamic event is occurring. In this case, the dynamic event detection section 111 performs the DL processing by using the DL model described in the example of further detecting a frame image in which a dynamic event is occurring. The dynamic event detection section 111 may use an object (smoke) detection algorithm for a frame image detected in the DL processing to detect, in the frame image, a region in which a dynamic event is occurring .

Hereinafter, the first deep learning processing section 113, the second deep learning processing section 115, the synthesis section 117, and the third deep learning processing section 119 which are included in the dynamic event detection section 111 will be described.

The first deep learning processing section 113 performs previous-stage DL processing on a moving image after contrast enhancement which has been enhanced by the contrast enhancement section 107, and outputs a first feature amount map which is an intermediate output of the DL model. Examples of the first feature amount map include a multidimensional vector representing a motion in the moving image after the contrast enhancement.

The second deep learning processing section 115 performs previous-stage DL processing on a time-series-change moving image generated by the time-series-change moving image generation section 103 and outputs a second feature amount map which is an intermediate output of the DL model. Examples of the second feature amount map includes a multidimensional vector representing a motion in the time-series-change moving image.

The synthesis section 117 synthesizes a first feature amount map generated by the first deep learning processing section 113 and a second feature amount map generated by the second deep learning processing section 115. Thus, the synthesis section 117 generates a synthesis feature amount map.

The third deep learning processing section 119 performs latter-stage DL processing on a synthesis feature amount map generated by the synthesis section 117 and outputs a detection result of a dynamic event, such as the probability that the dynamic event is occurring, which is a final output of the DL model.

The false detection suppression section 121 performs control for suppressing false detection of the dynamic event detection section 111. The false detection suppression section 121 suppresses false detection of the dynamic event detection section 111 by, for example, at least one of score smoothing processing, detection likelihood threshold processing, and notification issuance suppression processing.

For example, the DL model described above may cause the existence probability of a processing unit to increase due to an instantaneous motion or a pixel change other than a dynamic event to be detected, which may result in false detection. In this case, the false detection suppression section 121 is capable of suppressing false detection by using the score smoothing processing. Specifically, as the score smoothing processing, the false detection suppression section 121 performs smoothing of the time-series output probability, which is the detection result of the dynamic event detection section 111, by using backward moving average processing. Note that, by increasing the step width (stride width) or the window size (kernel size) in the moving average processing, it is possible to obtain a larger false detection suppression effect.

In addition, for example, making no false detection may be more important than early detection of a dynamic event to be detected, depending on the installation conditions of the imaging apparatus 10. In this case, the false detection suppression section 121 is capable of suppressing the false detection by increasing the detection likelihood threshold by the detection likelihood threshold processing and performing threshold processing. Specifically, the false detection suppression section 121 applies the threshold processing to the output probability, which is the detection result of the dynamic event detection section 111, and discards a processing result with a low probability.

In addition, for example, in a case where the imaging apparatus 10 is fixedly disposed, a false notification factor may repeatedly occur. In this case, after a first notification is issued, the false detection suppression section 121 is capable of suppressing the false detection by suppressing subsequent false notifications by using the notification suppression processing. Specifically, in a case where a notification is issued because the output probability which is the detection result of the dynamic event detection section 111 exceeds a threshold, the false detection suppression section 121 performs control such that no notification is issued for a specified number of seconds even when the output probability exceeds the threshold.

Next, operations of the dynamic event detection apparatus in the present embodiment will be described.

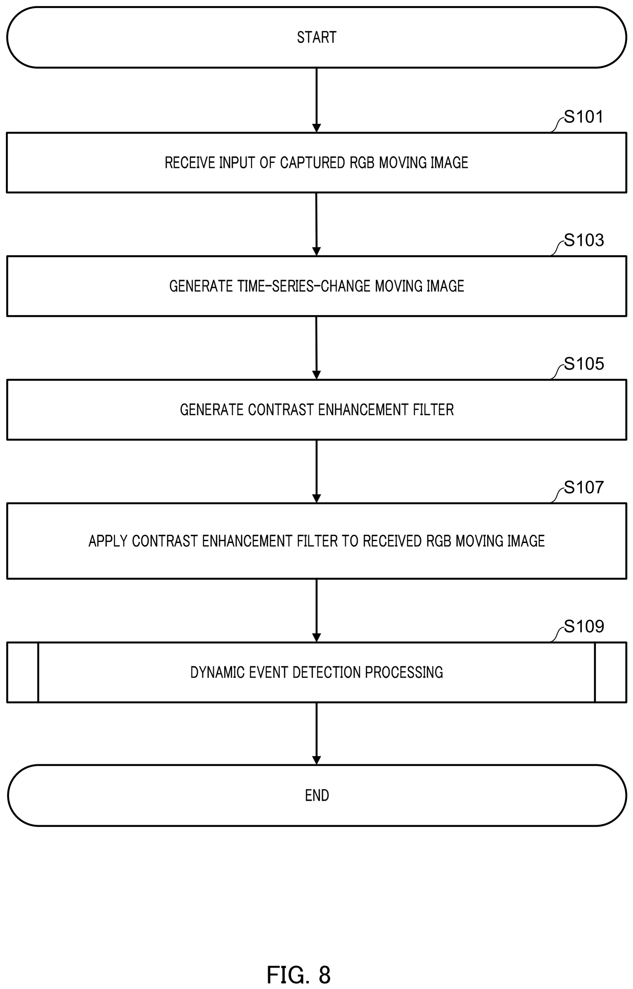

Fig. 8 is a flowchart illustrating an example of processing performed at the dynamic event detection apparatus 100 in the present embodiment.

First, the input reception section 101 receives an input of an RGB moving image captured by the imaging apparatus 10 (step S101).

Subsequently, the time-series-change moving image generation section 103 generates a time-series-change moving image indicating a time-series change in a moving object appearing in the RGB moving image received by the input reception section 101 (step S103).

Subsequently, based on the time-series-change moving image generated by the time-series-change moving image generation section 103, the filter generation section 105 generates a contrast enhancement filter for enhancing the contrast of a motion region in which the moving object appears on the RGB moving image received by the input reception section 101 (step S105).

Subsequently, the contrast enhancement section 107 applies the contrast enhancement filter generated by the filter generation section 105 to the RGB moving image received by the input reception section 101 to enhance the contrast of the motion region on the RGB moving image (step S107).

Subsequently, the dynamic event detection section 111 performs, based on the moving image after the contrast enhancement which has been enhanced by the contrast enhancement section 107, dynamic event detection processing of detecting whether a dynamic event as a target is occurring (step S109). Thereafter, the false detection suppression section 121 performs control for suppressing false detection of the dynamic event detection section 111, as necessary.

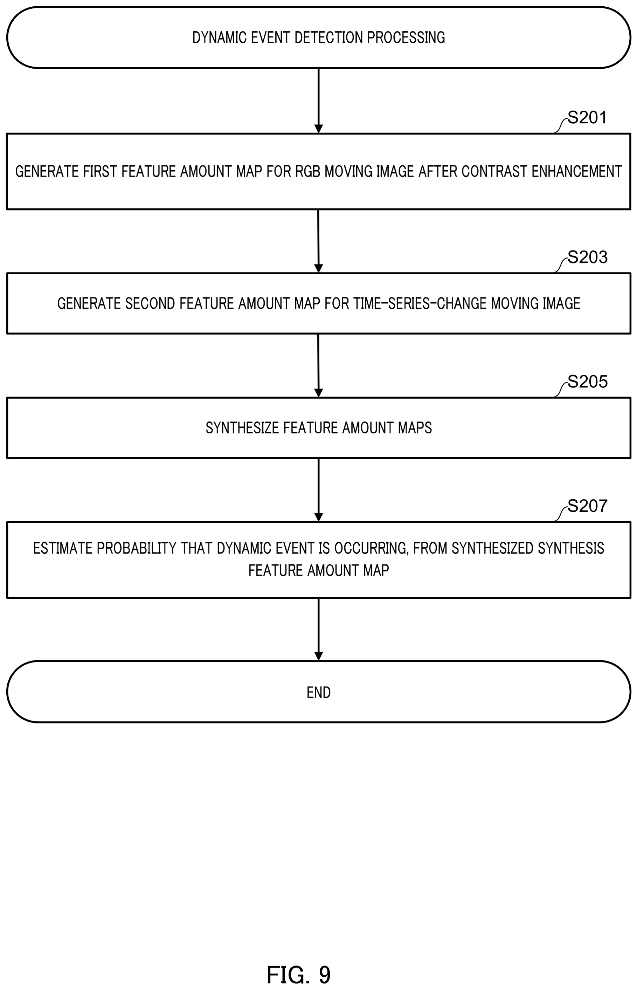

Fig. 9 is a flowchart illustrating an example of the dynamic event detection processing in the present embodiment.

First, the first deep learning processing section 113 performs previous-stage DL processing on the RGB moving image after the contrast enhancement which has been enhanced by the contrast enhancement section 107, and generates a first feature amount map which is an intermediate output of the DL model (step S201).

Subsequently, the second deep learning processing section 115 performs previous-stage DL processing on the time-series-change moving image generated by the time-series-change moving image generation section 103, and generates a second feature amount map which is an intermediate output of the DL model (step S203).

Subsequently, the synthesis section 117 synthesizes the first feature amount map generated by the first deep learning processing section 113 and the second feature amount map generated by the second deep learning processing section 115 (step S205).

Subsequently, the third deep learning processing section 119 performs latter-stage DL processing on the synthesis feature amount map synthesized by the synthesis section 117, estimates the probability that a dynamic event is occurring, or the like, which is the final output of the DL model, and outputs the probability or the like as the detection result of the dynamic event (step S207).

As described above, in the present embodiment, a dynamic event is detected by applying, to a moving image captured by the imaging apparatus 10, a contrast enhancement filter that enhances the contrast between a moving object and the background, which has been obtained from a time-series-change moving image. For this reason, according to the present embodiment, it is possible to efficiently detect a dynamic event in consideration of a time-series change from a detection start time point of the dynamic event, and it is possible to expect an improvement in non-detection of the dynamic event.

For example, in the technology disclosed in "STCNet: Spatio-Temporal Cross Network for Industrial Smoke Detection" described above, the RGB moving image and the inter-frame difference moving image cannot supplement information mutually in a case where the contrast of the RGB moving image is low, which may result in non-detection of a dynamic event. In the present embodiment, on the other hand, the contrast between a moving object and the background is increased by the contrast enhancement filter even in a case where the contrast of the RGB moving image is low. For this reason, according to the present embodiment, it is possible to supplement information mutually with a time-series-change moving image, and it is possible to expect an improvement in non-detection of a dynamic event.

In addition, for example, in the technology disclosed in Japanese Patent Application Laid-Open No. 2005-166054 described above, a small motion of a moving object, which has to be detected as a dynamic event in the first place, and the background in a moving image that contributes to detection of a dynamic event are also removed as noise, which may result in non-detection of a dynamic event. In the present embodiment, on the other hand, the contrast between a moving object and the background is increased by the contrast enhancement filter, and thus, when a dynamic event is detected, a small motion of a moving object and the background in a moving image can also be taken into consideration with high sensitivity, and the detection can be performed by paying attention to the small motion of the moving object and the background in the moving image. For this reason, according to the present embodiment, it is possible to expect an improvement in non-detection of a dynamic event.

As described above, according to the present embodiment, it is possible to expect a no-detection improvement effect by emphasizing a target region in a RGB moving image. In addition, according to the present embodiment, it is also possible to expect a false detection improvement effect due to the region other than a target region becoming relatively inconspicuous. Further, according to the present embodiment, it is also possible to expect a false detection improvement effect due to the possibility of increasing the detection threshold.

### (Variations)

Next, variations of the above-described embodiment will be described. Note that, in each of the following variations, portions different from those in the above-described embodiment will be mainly described, and descriptions of portions similar to those in the above-described embodiment will be omitted.

### (Variation 1)

In the above-described embodiment, a case where the dynamic event is smoke has been described as an example. However, the dynamic event is not limited thereto, and may be fog, steam, gas, landslide (falling rock), or the like. Even by configuring in the above-described manner, it is possible to reduce the risk of no-detection of a dynamic event and to perform detection of an event from the initial state of the event accurately in the same manner as in the above-described embodiment.

### (Variation 2)

In the above-described embodiment, a case where the dynamic event detection section 111 is realized by the DL processing has been described as an example, but the present invention is not limited thereto. For example, the dynamic event detection section 111 may also be realized by a machine learning algorithm other than deep learning, such as a support vector machine. In addition, for example, the dynamic event detection section 111 may also be realized by a rule-base algorithm without using a machine learning algorithm. Examples of the detection by the rule-base algorithm include detection by using edge detection and binarization to extract, from a moving image after a motion region is enhanced, a region in which a dynamic event is occurring, calculating a determination score, and comparing the determination score with a reference value, or the like. Note that, it may also be configured such that the dynamic event detection section 111 is realized by using a machine learning algorithm other than deep learning in combination with a rule-base algorithm.

### (Program)

A program that is executed on each of the apparatuses in the embodiment described above and each of the variations described above is provided in such a manner that the program is stored as an installable format file or an executable format file in a computer-readable storage medium such as a CD-ROM, a CD-R, a memory card, a DVD, or a flexible disk (FD).

In addition, a program that is executed on each of the apparatuses in the embodiment described above and each of the variations described above may also be provided by storing the program in a computer connected to a network such as the Internet and by causing the program to be downloaded via the network. In addition, a program that is executed on each of the apparatuses in the embodiment described above and each of the variations described above may also be provided or distributed via a network such as the Internet. In addition, a program that is executed on each of the apparatuses in the embodiment described above and each of the variations described above may also be provided in such a manner that the program is incorporated in a ROM or the like in advance.

A program that is executed on each of the apparatuses in the embodiment described above and each of the variations described above has a module configuration for realizing each section described above on a computer. As actual hardware, for example, it is configured such that the CPU reads a learning program from the HDD onto the RAM and executes the learning program, and thus, each section described above is realized on the computer.

Note that, the embodiment described above and each of the variations described above are merely examples of implementation in implementing the present disclosure, and the technical scope of the present disclosure should not be construed to be limited thereby. Accordingly, the present disclosure can be implemented in various forms without departing from the gist or main features thereof. For example, the embodiment described above and each of the variations described above may be combined as appropriate. In addition, for example, in the embodiment described above and each of the variations described above, some constituent elements may be deleted from all the constituent elements.

Although embodiments of the present invention have been described and illustrated in detail, the disclosed embodiments are made for purpose of illustration and example only and not limitation. The scope of the present invention should be interpreted by terms of the appended claims.

### Reference Signs List

1 Dynamic event detection system
2 Network
10 Imaging apparatus
100 Dynamic event detection apparatus
101 Input reception section
103 Time-series-change moving image generation section
105 Filter generation section
107 Contrast enhancement section
III Dynamic event detection section
113 First deep learning processing section
115 Second deep learning processing section
117 Synthesis section
119 Third deep learning processing section
121 False detection suppression section

## Claims

1. A dynamic event detection apparatus (100), comprising:
an input reception section (101) that receives an input of a moving image (201) captured by an imaging apparatus (10);
a time-series-change moving image generation section (103) that generates a time-series-change moving image (211) indicating a time-series change in a moving object (206) appearing in the moving image (201);
a contrast enhancement section (107) that enhances, based on the time-series-change moving image (211), contrast of a motion region in which the moving object (206) appears on the moving image (201); and
a dynamic event detection section (111) that detects, based on the moving image (231) after contrast enhancement, whether a dynamic event as a target occurring.

2. The dynamic event detection apparatus (100) according to claim 1, further comprising a filter generation section (105) that generates a contrast enhancement filter (221) for enhancing the contrast of the motion region based on the time-series-change moving image (211), wherein
the contrast enhancement section (107) applies the contrast enhancement filter (221) to the moving image (201) to enhance the contrast of the motion region.

3. The dynamic event detection apparatus (100) according to claim 2, wherein
the contrast enhancement filter (221) is a filter whose intensity increases as a motion of the moving object (206) increases.

4. The dynamic event detection apparatus (100) according to claim 3, wherein
the filter generation section (105) averages frame images for a predetermined number of frames of the time-series-change moving image (211) and applies a smoothing filter in a spatial direction to generate the contrast enhancement filter (221).

5. The dynamic event detection apparatus (100) according to claim 4, wherein
the filter generation section (105) normalizes a pixel value of the generated contrast enhancement filter (221) to a value between a predetermined minimum value and a predetermined maximum value.

6. The dynamic event detection apparatus (100) according to claim 2, wherein
the filter generation section (105) generates the contrast enhancement filter (221) for each channel of the moving image (201) or generates and integrates the contrast enhancement filter (221) for each channel of the moving image (201).

7. The dynamic event detection apparatus (100) according to claim 1, wherein
the dynamic event detection section (111) further detects, in the moving image (201), a frame image in which the dynamic event is occurring.

8. The dynamic event detection apparatus (100) according to claim 7, wherein
the dynamic event detection section (111) further detects, in the frame image, a region in which the dynamic event is occurring.

9. The dynamic event detection apparatus (100) according to claim 1, wherein
the dynamic event detection section (111) further detects, based on the time-series-change moving image (211), whether the dynamic event is occurring.

10. The dynamic event detection apparatus (100) according to claim 1, 7, 8 or 9, wherein
the dynamic event detection section (111) performs detection by deep learning processing.

11. The dynamic event detection apparatus (100) according to claim 8, wherein
the dynamic event detection section (111) uses deep learning processing to detect whether the dynamic event is occurring and to detect the frame image in which the dynamic event is occurring, and uses an object detection algorithm different from the deep learning processing to detect, in the frame image, a region in which the dynamic event is occurring.

12. The dynamic event detection apparatus (100) according to claim 1, wherein
the time-series-change moving image generation section (103) generates the time-series-change moving image (211) based on a difference between adjacent frames of the moving image (201), a background difference with respect to the moving image (201), or an optical flow.

13. The dynamic event detection apparatus (100) according to claim 1, wherein
the imaging apparatus (10) is a camera fixedly disposed indoors or outdoors.

14. A dynamic event detection method, comprising:
receiving, by an input reception section (101), an input of a moving image (201) captured by an imaging apparatus (10);
generating, by a time-series-change moving image generation section (103), a time-series-change moving image (211) indicating a time-series change in a moving object (206) appearing in the moving image (201);
enhancing, by a contrast enhancement section (107), based on the time-series-change moving image (211), contrast of a motion region in which the moving object (206) appears on the moving image (201), and
detecting, by a dynamic event detection section (111), based on the moving image (231) after contrast enhancement, whether a dynamic event as a target is occurring.

15. A program that causes a computer to execute:
receiving an input of a moving image (201) captured by an imaging apparatus (10);
generating a time-series-change moving image (211) indicating a time-series change in a moving object (206) appearing in the moving image (201);
enhancing, based on the time-series-change moving image (211), contrast of a motion region in which the moving object (206) appears on the moving image (201); and
detecting, based on the moving image (231) after contrast enhancement, whether a dynamic event as a target is occurring.
